# EUROPEAN PATENT SPECIFICATION

(11) **EP 2 444 304 B1**
(45) Date of publication and mention of the grant of the patent: **25.02.2015**
(21) Application number: 11186576.2
(22) Date of filing: 25.10.2011
(51) Int. Cl.: B62D 49/08, B60G 17/016, B60G 9/02, B60R 21/013, E02F 9/22, B66F 9/06, G08B 19/00

(54) **System and method for preventing overturning of land vehicles**
System und Verfahren zum Verhindern des Umkippens eines Landfahrzeugs
Système et procédé pour empecher le basculement d'un véhicule agricole

(30) Priority: 25.10.2010 IT MO20100296
(43) Date of publication of application: 25.04.2012
(73) Proprietor: CNH Industrial Italia S.p.A., 10135 Torino (IT)
(72) Inventor: Bordini, Giorgio, 41043 Formigine (IT)
(74) Representative: CNH Industrial IP Department

(56) References cited:
- EP-A1- 1 167 639
- EP-A1- 1 698 497
- EP-A1- 2 225 930
- EP-A2- 1 972 471
- WO-A1-03/019493
- DE-A1- 10 154 805
- FR-A- 1 194 819
- FR-A1- 2 681 563
- FR-A1- 2 718 552
- FR-A1- 2 821 601
- US-A1- 2006 220 331
- US-A1- 2008 208 416

## Description

The present invention relates to a system and method for preventing overturning of land vehicles, in particular of wheeled agricultural tractors.

A land vehicle provided with wheels resting on the ground and with traction, such as, for example, an agricultural tractor, is generally characterised by the presence of two axes, or axles, arranged transversely to the movement direction of the vehicle. The distribution of the weight of the vehicle on the two axles varies according to use, the rest configuration on the ground, the driven equipment connected to the vehicle, the load on board, both fixed and variable or movable, and only in a few operating circumstances it is constructionally predetermined.

In general, except for some cases, in agricultural tractors, the axles do not have suspension, but are rigid, and thus, for the purpose of distributing the load as uniformly as possible on the ground between the wheels of the same axle, one of the two axles is articulated with respect to the body of the vehicle, in such a manner as to be able to oscillate, i.e. rotate, with respect to a longitudinal axis of the vehicle, and thus to be able to follow, at least partially, the unevenness of the ground, which would otherwise force the vehicle to rest irregularly on the ground, which would alter the loads of the wheels on the ground, until, for example, a wheel became detached from the ground.

In general, in the vehicles the axle is made to oscillate on which the lesser load rests on average, said axle, in the case of agricultural tractors, being the front axle.

In this case, the roll of the vehicle is imposed by the rear axle, which is fixed with respect to the vehicle, whereas the front axle can perform limited oscillations around the longitudinal axis of the vehicle on which it is hinged, thus enabling the front wheels to follow the unevenness of the ground, independently of the roll angles imposed on the vehicle by the rear wheels, which in turn follow the unevenness of the ground: in other words, the front axle oscillates with respect to the vehicle whenever at least one of the wheels encounters a difference of level of the ground, unless the differences of level are identical and aligned with respect to one or other axle.

Said oscillation is limited, by suitable end-of-stroke stops, to values that are on average compatible with the oscillations of normal use, for example comprised between + 10° and -10°, in order to also avoid interference between the wheels and the vehicle, particularly during steering.

The connection of the front axle to the vehicle, which is referable to an external hinge, in fact makes the rest outline of the vehicle on the ground referable, in the context of the permitted oscillation for the front axle, to that of a three-wheeled vehicle, with two rear and one front resting point, which is moreover raised from the ground in relation to the height from the ground of said hinge, at least for all the roll configurations of the vehicle for which said limitation to the oscillation of the front axle has not intervened.

Thus, within the oscillation limits within said end-of-stroke, the front axle does not contribute in any way to resistance to overturning.

All this makes the stability of the vehicle on sloping ground critical and when the vehicle is provided with tools connected to the front end of the vehicle, with which even loads of significant size are lifted or transported.

This makes it dangerous to drive the vehicle on sloping ground and during lifting and transporting of very heavy loads, with a great risk of the vehicle overturning and of serious consequences, which are often mortal for the driver of the vehicle.

EP 1 972 471 A, EP 1 167 639 A, DE 10154805 A, FR 2681563 and EP 1698497 A are relevant documents disclosing systems for improving the lateral stability of similar vehicles with an oscillating axle.

The object of the present invention is to provide a device and a method for significantly increasing the stability of the vehicle, thus significantly reducing the risk of the vehicle overturning in critical working conditions.

The object of the present invention is achieved with a device according to claim 1.

Owing to the invention, the action straight line of the resultant of the forces acting on the vehicle is maintained inside the resting polygon of the vehicle on the ground, or the resting polygon is enlarged such as to continue to contain therein the action straight line of the resultant of the forces acting on the vehicle, thus preventing overturning of the vehicle, also with a slope of the ground, or transported or lifted loads that would normally cause the vehicle to overturn. The safety in using the vehicle is thus increased significantly.

One embodiment of the invention is disclosed below by way of non-limiting example, with reference to the attached drawings, in which:
Figure 1 is a front view of a vehicle resting on horizontal ground;
Figure 2 is a side view of the vehicle in Figure 1;
Figure 3 is a view like that in Figure 1, in which, by way of example, the possible oscillation of the front axle is illustrated, which is permitted by end-of-stroke abutments that limit the angle of oscillation of the front axle;
Figure 4 is a plan scheme that illustrates the position of the centre of gravity of the vehicle with respect to the wheels and to the connecting point of the front axle to the body of the vehicle, when the vehicle rests on horizontal ground;
Figures 5, 6 and 7 illustrate the resting conditions on the ground of the vehicle on horizontal ground;
Figure 8 is a front view of a vehicle with the front wheels resting on a portion of horizontal ground and the rear wheels tilted laterally with respect to the movement direction of the vehicle, with a rear wheel raised from the ground;
Figure 9 is a side view of the vehicle in Figure 8;
Figure 10 is a plan scheme that illustrates the position of the centre of gravity of the vehicle in Figure 8 with respect to the wheels and to the connecting point of the front axle to the body of the vehicle;

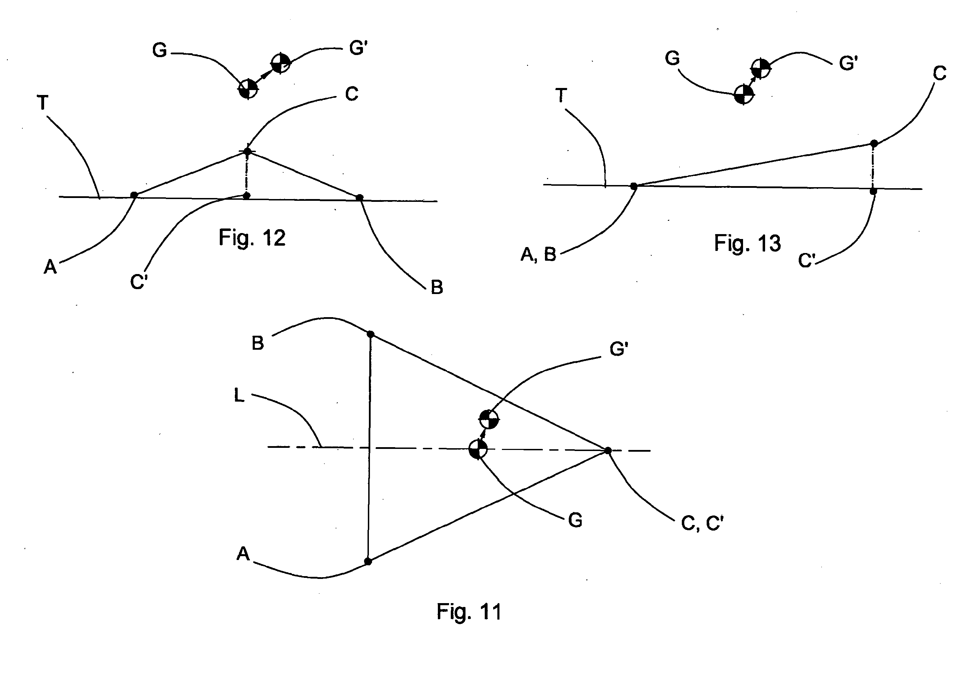

Figures 11, 12 and 13 illustrate the resting conditions on the ground of the vehicle in Figure 8 and the movement of the centre of gravity of the vehicle with respect to the resting condition on horizontal ground;
Figures 14, 15 and 16 illustrate the limit balance condition of the vehicle, in the condition in Figure 8;
Figures 17 to 20 illustrate the resting conditions on the ground of the vehicle in the maximum tilt condition of the body of the vehicle with respect to the front axle and with a rear wheel that is raised with respect to the ground;
Figure 21, 22 and 23 illustrate the system for preventing overturning according to the invention;
Figures 24 and 25 illustrate the operation of the system for preventing overturning according to the invention;
Figure 26 illustrates an application of the system for preventing overturning according to the invention to a vehicle in which between the front axle and the body of the vehicle a suspension is interposed.

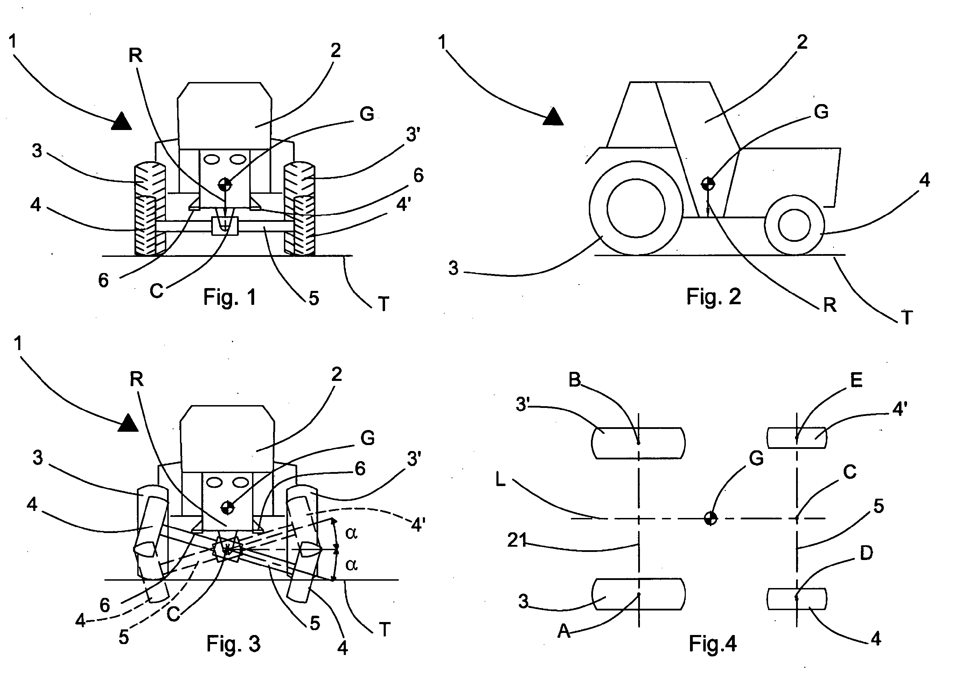

In figures 1, 2 and 4 there is illustrated a vehicle 1, for example, a vehicle, with an oscillating front axle 5 in a resting condition on horizontal ground T.

The vehicle 1 is provided with a body 2 to which a pair of rear wheels 3, 3' is connected that receive the motion from the engine of the vehicle via a rear axle 21 connected stiffly to the body 2. The vehicle 1 is further provided with a pair of front wheels 4, 4' fixed to a front axle 5 that is connected to the body 2 of the vehicle via a hinge connection C that enables the front axle 5 to oscillate with respect to the body 2. On the body 2, stop elements 6 are provided that limit the oscillation angle α of the front axle 5 to a set value, for example 10°.

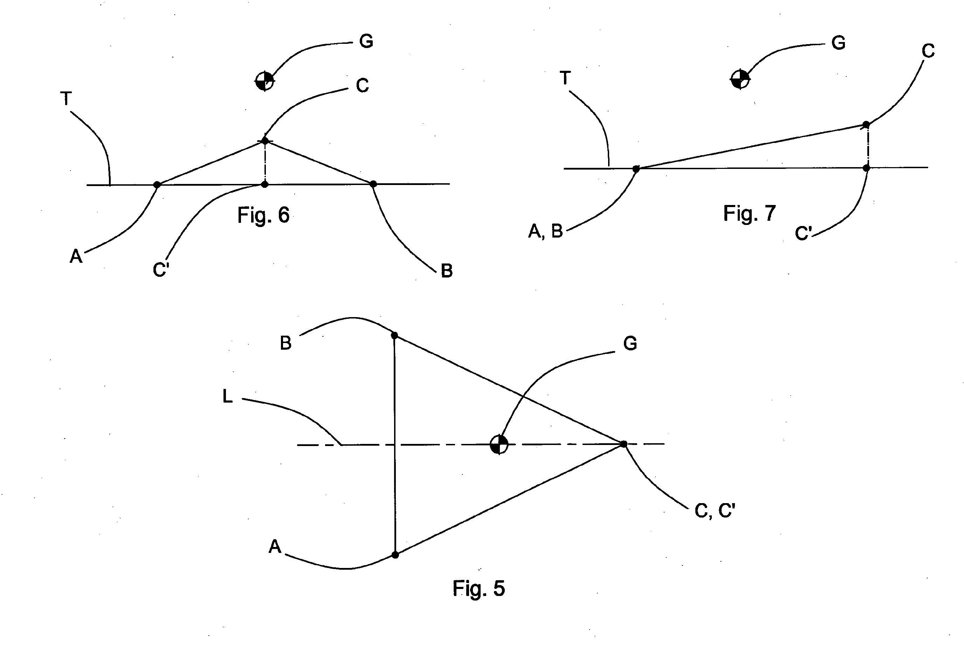

The oscillating front axle 5 reduces the overturning stability of the vehicle 1 with respect to the case in which also the front axle is stiffly connected to the vehicle: in fact, whilst this last configuration has a resting polygon on the ground of rectangular type, the vertices A, B, D, E of which are positioned at the contact points on the ground of the rear wheels 3, 3' and of the front wheels 4, 4', the configuration with an oscillating axle 5 on the other hand has a triangular, substantially isosceles shape, resting polygon on the ground with two vertices A and B positioned at the contact points on the ground of the rear wheels 3, 3' and a third vertex positioned at the hinge connection C between the front axle 5 and the body 2 of the vehicle 1 and thus at a certain height from the ground T, corresponding to the distance C-C' between the hinge connection C and the C' projection thereof on the ground T (Figure 6).

The height C-C' from the ground of the third vertex C depends on the conformation of the front axle 5, on the manner of connection to the body 2 of the vehicle 1, and on the diameters of the front wheels 4, and, in general, for agricultural tractors, can be greater than the average of the spokes under load of the two front wheels 4, in particular in the so-called high-pin configurations, where the axis of the hinge connection C between the front axle 5 and the body 2 is above the rotation axis of the front wheels 4.

The height C-C' from the ground of the third vertex C of the resting triangle, placed in the front, constitutes a pejorative factor, in terms of resistance to overturning, compared with a configuration with a resting triangle with all three vertices on the ground.

### Dynamics of lateral overturning of a vehicle

Starting from the general principle that a resting body remains in a stable equilibrium if the resultant of the forces acting thereon is directed to the rest and meets the resting surface inside the resting polygon, in the case of a vehicle 1, if the vehicle is subject to the single or combined effects of centrifugal forces, due to curved trajectories, of lateral slopes, longitudinal slopes and of forces parallel to the motion direction thereof, the reactions of resting on the ground of the single wheels will be reconfigured as constraints for re-establishing equilibrium.

Nevertheless, as they are non-bidirectional constraints, i.e. constraints that are such as not to prevent lifting of the wheels from the ground, a condition may occur, through the effect of the forces acting on the vehicle 1, because of which a rear wheel lifts up from the ground.

It should be noted that, at least until the front axle 5 does not reach the oscillation end-of-stroke limits defined by the stop elements 6, the stability of the vehicle, in terms of lateral overturning, is ensured only by the rear wheels 3, 3'.

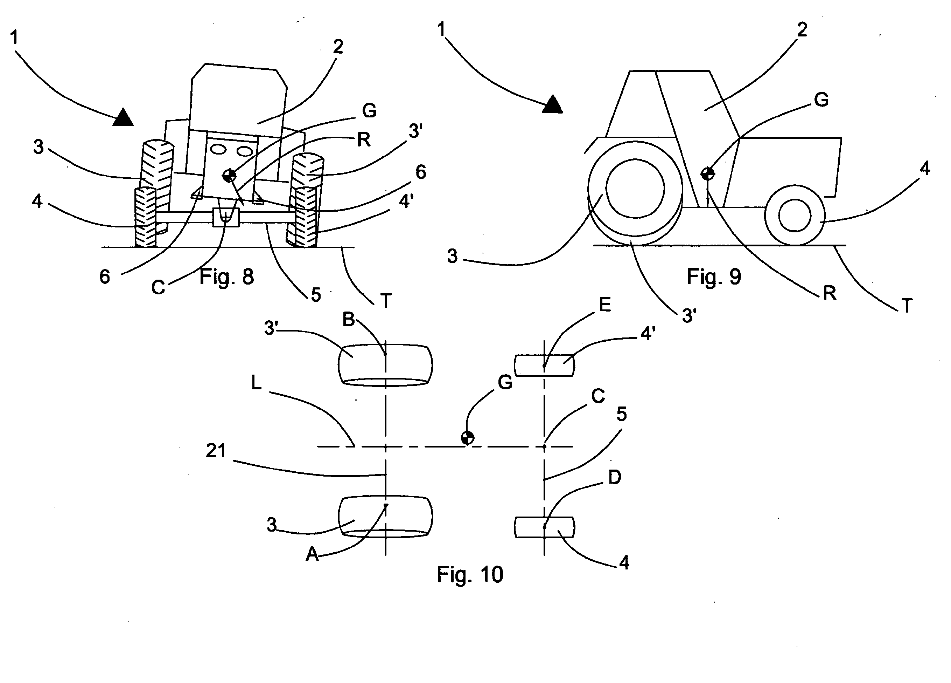

If the resting points A and B of the rear wheels 3, 3' are on a plane that is tilted with respect to the horizontal because of the tilt or bumpiness of the ground on which the rear wheels 3, 3' rest, the body 2 of the vehicle 1 rotates with respect to the front axle 5 around the hinge connection C. This rotation may cause one of the rear wheels to lift up from the ground, for example the rear wheel 3, as shown in Figures 8 and 9. Owing to this lift, the resting triangle ABC degenerates in a resting straight line, shown, in the illustrated example, from the side BC of the triangle ABC, which joins the resting point on the ground of the rear wheel 3' that has remained adhering to the ground with the hinge connection C between the front axle 5 and the body 2. Through the effect of the rotation of the body 2 of the vehicle 1 with respect to the front axle 5 and of the lifting of the rear wheel 3, the centre of gravity G of the vehicle rotates around an axis coinciding with said side BC. Through the effect of said rotation, the centre of gravity G rises and, simultaneously, moves towards said side BC and, moving on a plane that is orthogonal to said side BC, also moves forwards in the advancing direction of the vehicle: the action straight line R of the resultant vector of the forces applied to the vehicle 1, passing through the centre of gravity G, thus approaches said side BC, inasmuch as the centre of gravity G moves, simultaneously, upwards towards the exterior and also towards the front part of the vehicle.

Until the action straight line of the resultant R of the forces acting on the vehicle 1, applied to the centre of gravity G, does not exceed said side BC, i.e. remains inside the triangle ABC, the vehicle 1 remains in equilibrium whereas, when the action straight line of the resultant R exceeds the side BC, i.e. exits from the triangle ABC, the vehicle 1 overturns.

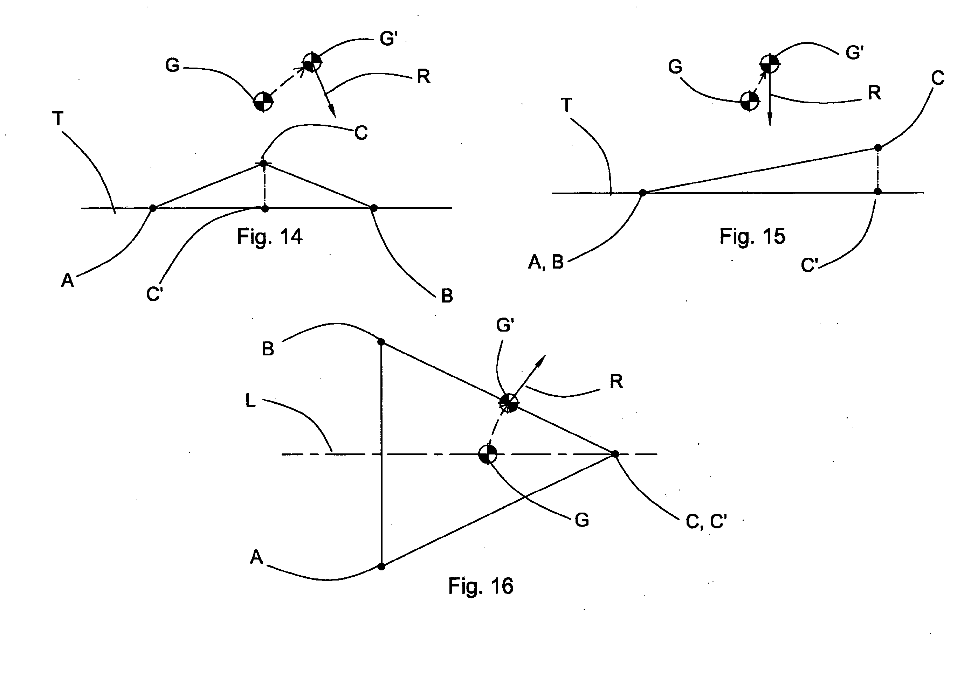

Figures 14, 15 and 16 illustrate the limit balance condition of the vehicle 1, i.e. the condition in which the action straight line of the resultant R intersects said side BC.

The overturning dynamics of the vehicle 1 is nevertheless influenced by the fact that the rotation of the body 2 of the vehicle 1 with respect to the front axle 5 is limited to a set angle α (Figure 1) by the stop elements 6 that, when they come into contact with the front axle 5, prevent further rotation of the body 2 of the vehicle 1 with respect to the front axle 5. Normally, this occurs before the action straight line of the resultant R has reached said side BC, i.e. before the vehicle 1 has reached limit balance condition.

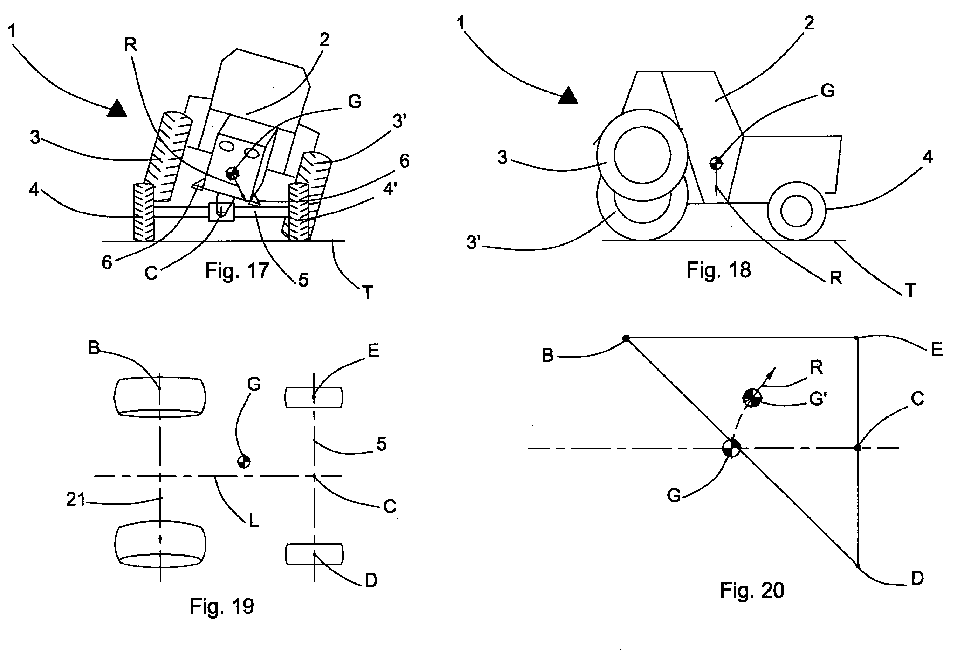

When the stop elements 6 come into contact with the front axle 5, the latter becomes bound to the body 2 of the vehicle 1 and, consequently, the front wheels 4, 4' become resting points of the vehicle and the resting segment BC is reconfigured in a resting triangle, the vertices of which are the contact points with the ground of the rear wheel 3' and of the front wheels 4, 4', i.e. the points B, D E, as illustrated in Figure 20.

The balance of the vehicle will thus be ensured until the action straight line of the resultant R of the forces acting on the vehicle 1 does not exceed the side BE of the resting triangle BDE. The side BE of the resting triangle BDE is further from the action straight line of the resultant R with respect to the segment BC that joins the resting point of the rear wheel 3 to the hinge connection C. Thus apparently the stop elements 6 seem to be able to prevent overturning of the vehicle. Nevertheless, it must be considered that rotation of the body 2 of the vehicle 1 with respect to the front axle 5 is a dynamic phenomenon. This means that when the stop elements 6 come into contact with the front axle 5, locking the rotation of the body 2 of the vehicle 1 with respect to said front axle 5, the inertia forces acting on the vehicle can continue the side rotation of the vehicle until the action straight line of the resultant R of the forces acting on the vehicle 1 is taken beyond said side BE, causing overturning of the vehicle 1.

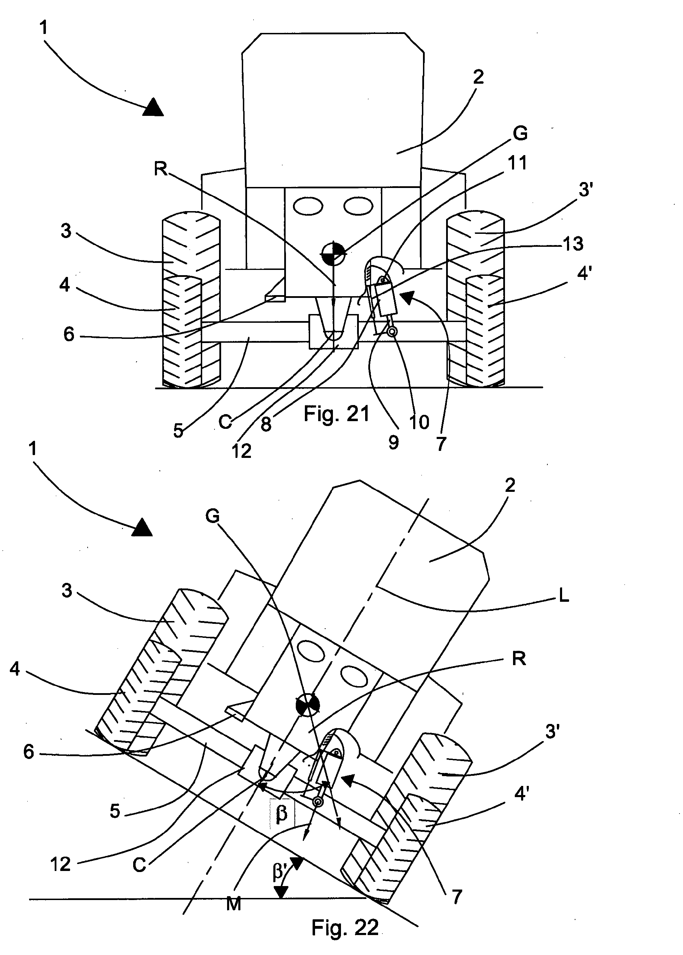

The stability of the vehicle 1 can be increased if movement of the centre of gravity G of the vehicle 1 with respect to the resting polygon on the ground is limited before the stop elements 6 come into contact with the front axle 5, such as to reduce noticeably the risk that the action straight line of the resultant R of the forces acting on the vehicle can exit the resting polygon, causing overturning of the vehicle. This result is obtained with the system for preventing overturning according to the present invention, illustrated in Figures 21 to 25.

The system for preventing overturning according to the invention comprises at least one actuator 7, for example a dual-effect oleodynamic actuator, interposed between the front axle 5 and the body 2 of the vehicle 1. The actuator 7 comprises an actuator body 8, connected to the body 2 of the vehicle 1 by a first rotating connection 11, and a stem 9 connected to the front axle 5 via a second rotating connection 10. The actuator 7 is able, according to a first intervention mode, to exert controllable forces on the front axle 5 in such a manner as to contrast the rotation of the front axle 5 with respect to the body 2 of the vehicle 1.

The actuator 7, according to a second intervention mode, depending on the overturning risk conditions, is also suitable for locking the front axle 5 in a set angular position with respect to the body 2 of the vehicle 1, and thus to make the wheels 4, 4' of the front axle 5 take up a set position with respect to said body 2.

The first or the second intervention mode are selected by the system according to the invention on the basis of the size of the deviation of the action straight line of the resultant R of the forces applied with respect to a vertical symmetry plane L of the vehicle, and of acceleration states, or of roll motions, or of pitch motions, said acceleration states and said motions determining the risk of overturning of the vehicle.

The maximum stroke of the stem 9 of the actuator 7 is dimensioned in such a manner as not to limit the maximum angle α of oscillation of the front axle 5. Further, in conditions of normal operating stability of the vehicle 1, the actuator 7 needs not to oppose appreciable resistance to the oscillation of the front axle 5, in the context of the expected excursion.

The rotation angle of the front axle 5 with respect to the body 2 can be detected by an angular position transducer 12 associated with the front axle 5 or alternatively by a linear position transducer 13 associated with the stem 9 of the actuator 7.

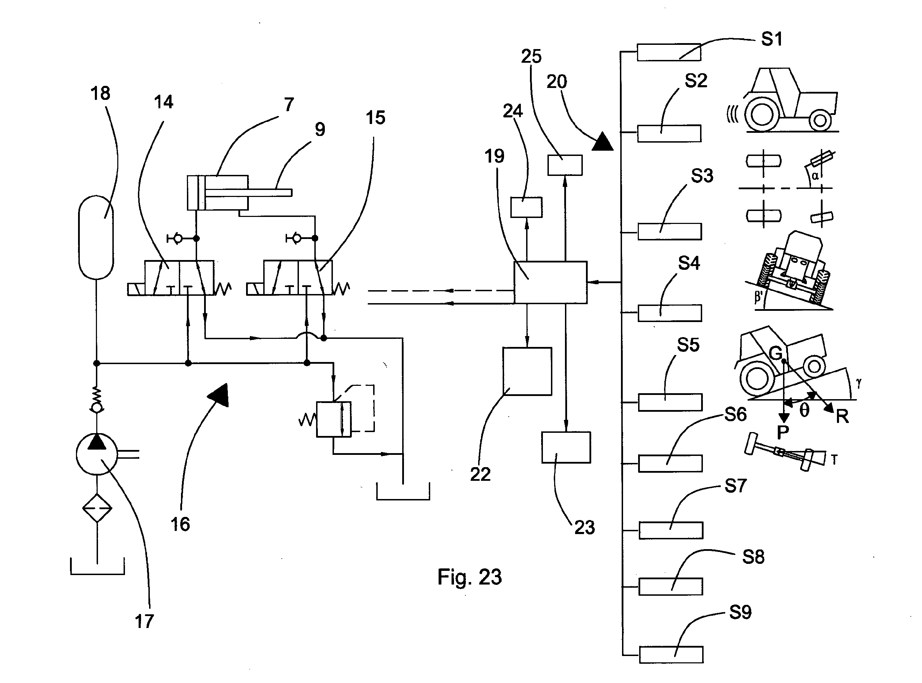

The actuator 7, which in the embodiment illustrated is of oleodynamic type, is connected to an electrohydraulic supply and control system, which, as illustrated in Figure 23 comprises, advantageously:
- a first hydraulic solenoid valve 14 and a second hydraulic solenoid valve 15, which are pilotable electrically, to supply a hydraulic fluid to the two chambers of the actuator 7,
- a supply circuit 16 of said hydraulic fluid supplied by a hydraulic pump 17 driven by the engine of the vehicle 1,
- a possible hydraulic accumulator 18, connected to said supply circuit 16; the hydraulic accumulator 18 is used to supply the hydraulic fluid that is necessary for a complete intervention manoeuvre of the system for preventing overturning also in the event of a stop of the engine of the vehicle;
- a system 20 of sensors, comprising, advantageously but not necessarily:
- a first sensor S1 that detects the advancing speed of the vehicle;
- a second sensor S2 that detects the steering angle of the front wheels 4, 4';
- a third sensor S3, for example of inertial type, that is able to detect both roll angles of the vehicle and transverse accelerations and roll accelerations and motions;
- a fourth sensor S4, which is also, for example, of inertial type, that is able to detect longitudinal accelerations and pitch accelerations and motions;
- a fifth sensor S5, that detects the angular position of the front axle 5 with respect to the body 2 of the vehicle, the fifth sensor S5 can consist of an angular position transducer that is associated with the front axle 5 and detects the rotation angle α of the front axle 5 with respect to the body 2 of the vehicle, or the fifth sensor S5 can consist of a linear position transducer 13, which is associated with the stem 9 of the actuator 7 and detects the extent of the stem 9, which is proportional to said rotation angle α;
- a control device 19, comprising a data-processing system, or operationally connected to a data-processing system, which receives and processes the signals coming from the system of sensors 20 and checks the operation of the supply pump 16 and of the hydraulic solenoid valves 14 and 15, to control the drive of the actuator 7, such that the stem 9 remains floating, i.e. follows without resistance the oscillations of the front axle 5, when the system for preventing overturning is inactive, or applies forces of a set value to the front axle 5, or locks the front axle 5 in set positions with respect to the body 2, when the system for preventing overturning becomes active, as will be explained in detail below.

A sixth sensor S6 that detects the driving of the accelerator of the vehicle and a seventh sensor S7 that detects the driving of the braking device of the vehicle can also be possibly provided.

In an simplified embodiment of the invention, the system of sensors 20 can be replaced by a single sensor that is able to detect the force components, accelerations and motion states, according to the three main longitudinal, transverse and vertical axes of the vehicle, and supply a double output signal comprising a first signal relating to the roll and to the transverse component of the inertia forces acting on the vehicle, i.e. a centrifugal component, and a second signal relating to pitch and to the longitudinal component of the inertia forces acting on the vehicle.

If the vehicle 1 is provided with a frontal device for lifting and transporting loads, it is advantageous for the system according to the invention to comprise also an eighth sensor S8 that is suitable for detecting the value of the load located on said frontal device and a ninth sensor S9 that is suitable for detecting the instantaneous position of said load with respect to the body 2 of the vehicle 1, in such a manner as to be able to calculate, in real time, the variable position of the centre of gravity of the system vehicle + frontal device + load.

The operation of the system for preventing overturning according to the invention will now be disclosed.

The intervention of the system for preventing overturning is dependent on the occurrence of an overturning risk condition, which may be caused by lateral movement, with respect to the vertical, of the action straight line of the resultant R of the forces acting on the vehicle, on the basis of the presence of transverse accelerations or roll motions, i.e. accelerations and motions in a direction that is transverse to the movement direction of the vehicle 1 and on the basis of the presence of longitudinal accelerations or pitch motions, i.e. accelerations and motions in a direction parallel to the movement direction of the vehicle.

The condition of a risk of overturning and the seriousness of said condition are determined by the aforesaid system of sensors, by detecting:
- the advancing speed of the vehicle 1, by the sensor S1;
- the possible driving of the accelerator command, by the sensor S6;
- the steering angle of the front wheels 4, 4', by the sensor S2;
- the roll angle, i.e. tilt of the longitudinal centreline plane L of the vehicle with respect to a vertical plane and a possible lateral acceleration, by the third sensor S3;
- the pitch angle, i.e. the tilt of the longitudinal axis of the vehicle with respect to a horizontal plane, and a possible longitudinal acceleration, by the fourth sensor S4;
- the rotation angle of the front axle 5 with respect to the body 2 of the vehicle, by the fifth sensor S5.

If the vehicle is provided with a frontal device for lifting and transporting loads, the value of the load that may have been placed on said frontal device and the position thereof can be detected via the eighth sensor S8 and the ninth sensor S9 in such a manner as to calculate the position of the centre of gravity of the system vehicle + load.

For the stability of the vehicle, the value of the roll angle and the evolution thereof over time is particularly critical. For this reason, the roll sensor S3 is used, which supplies very high frequency signals of the roll angle with respect to the horizontal axis, and is thus able to perform, through the processing of subsequent derivations, a predictive action of what could occur in terms of roll speed and roll angle, on the basis of sampling of the signal at the start of the potential overturning event.

On the basis of the processing of said signal, the system for preventing overturning intervenes, commanding the jack to generate a force between the front axle and the body of the vehicle that is such as to reconfigure the reactions of the front wheels on the ground such that they produce on the vehicle a torque in the opposite direction to the incipient roll motion read by said roll sensor S3, and with intensity that increases with the increasing of the roll signal, and thus of the roll acceleration and, by integration, of the probable final roll angle.

The pitch sensor signal S4 is used by the control device 19 to calculate a corrective factor of the roll angle in such a manner that the system according to the invention also takes account of the effects of pitch motions or of the longitudinal tilts of the vehicle, on the stability of the vehicle for determining the intervention mode of the system. In fact, if the tractor is moving downhill or is slowing, the stabilising intervention on the front axle will be more drastic than is the case with a tractor at constant speed or in a horizontal position and, vice versa, if the tractor is moving uphill or is accelerating, the stabilising intervention on the front axle will be less drastic than is the case with a tractor at constant speed or in a horizontal position.

This is because the relative position of the resultant of the forces acting on the vehicle with respect to the resting triangle/polygon also depends on the pitch angle, or anyway on longitudinal components of the inertia forces acting on the vehicle.

On the basis of the signals coming from the system of sensors 20, the control device 19 is able to calculate the position of action straight line of the resultant R of the forces acting on the vehicle 1 by calculating:
- the size of the deviation angle β (Figure 22) of the projection of said action straight line on a plane that is perpendicular to the longitudinal symmetry plane L of the vehicle, with respect to the longitudinal symmetry plane L of the vehicle;
- the size of a second angle θ formed by the projection of said action straight line R on said longitudinal symmetry plane L with the action straight line of the weight P of the vehicle (Figure 23).

The deviation angle β can be calculated by the control device 19 in function of the roll angle β' (Figure 23) and of the centripetal acceleration of the vehicle according to the following formula:
β = β' + k'v²/R in which v²/R is the centripetal acceleration of the vehicle when it is moving along a curve with a curvature radius R at speed v, k' is a dimensional coefficient.

The second angle θ can be calculated by the control device 19 in function of the pitch angle γ, according to the following formula:
θ = k"a+γ, where a is the longitudinal acceleration of the vehicle and k" is a dimensional coefficient. The coefficients k' and k" are determinable experimentally by using a prototype of the vehicle or a scale model.

On the basis of the value calculated of the angles β and θ , the control system 19 intervenes to reduce the risk of the vehicle 1 overturning.

It is advantageous that in the system for preventing overturning according to the invention two or more intervention thresholds are provided, depending on the seriousness of the overturning risk, to which various intervention modes of the system correspond. Said intervention thresholds are defined by set values of the sizes of the deviation angle β and of the second angle θ.

A first intervention threshold is defined by overcoming a first value β1, and/or θ1, of the size of the angles β and θ , which corresponds to a moderate overturning risk.

If the size of both angles β and θ is less than said first value β1 and θ1, the system for preventing overturning remains inactive and the control device 19 maintains the stem 9 of the actuator 7 in a floating condition, i.e. such that it follows the oscillations of the front axle 5 without opposing resistance. When, on the other hand, the size of the angle β , and/or of the second angle θ reaches and exceeds said first value β1, or θ1, the control device 19 activates the actuator 7 in such a manner that it exerts on the front axle 5 a force M that is translated into an increase of the ground reaction on the front wheel placed on the side on which the overturning risk exists.

It should be noted that the direction of the force M depends on the side towards which the vehicle 1 tends to overturn. If this side is, with respect to the longitudinal symmetry plane L, on the same side on which the actuator 7 is installed, the force M has to be directed towards the front axle 5, otherwise, the force M has to be directed towards the body 2 of the vehicle.

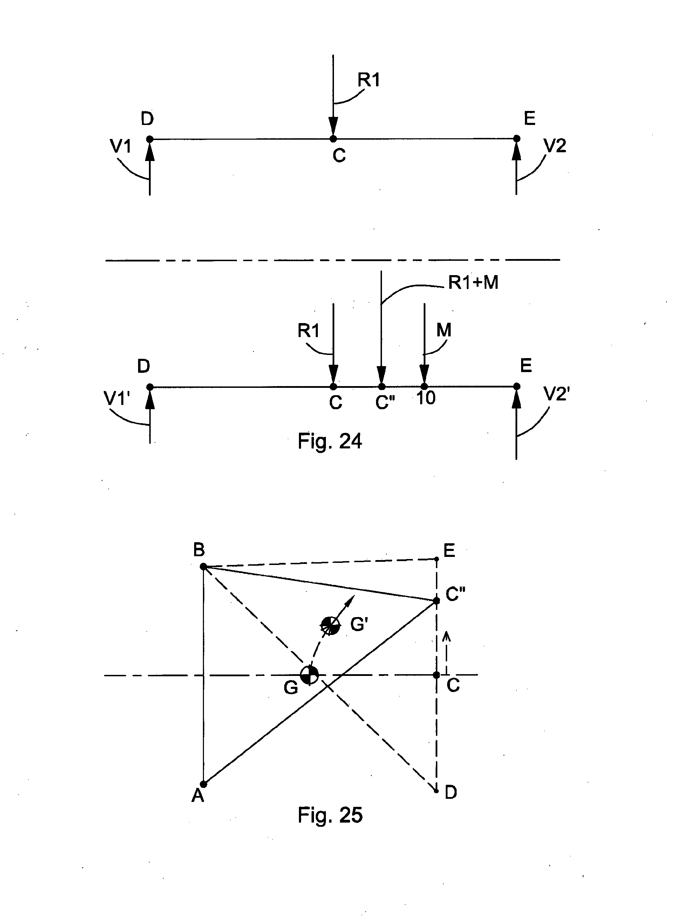

In the description that follows it is hypothesised that overturning tends to occur on the side of the front wheel 4'. As the force M applied by the actuator 7 to the front axle 5 depends on the differences β-β1 and/or θ-θ1, also the increase of the ground reaction on the wheel 4' is proportional to said differences, i.e. is greater the greater the value of said differences is. Through the effect of the application of said force M, the resultant of the forces acting on the front axle 5, that, in the absence of the force M, has a value R1 and passing through the hinge connection C (upper part of Figure 24), assumes a value R1+M and moves from the hinge connection C to a point C" that is in an intermediate position between the hinge connection C and the rotation connection 10 between the stem 9 of the actuator 7 and the front axle 5 (lower part of Figure 24).

The result of this movement is the equivalent of a modification of the resting triangle resting on the ground of the vehicle 1, which changes from the triangle ABC to the triangle ABC", the vertex C" of which is moved, with respect to the vertex C, to the side of the vehicle 1 where the risk of overturning exists. Owing to this modification of the resting triangle resting on the ground of the vehicle 1, the perimeter of the resting triangle moves in such a manner that the action straight line of said resultant R continues to pass inside the new resting triangle resting on the ground, thus reducing the risk that a condition of unstable equilibrium is reached in which the overturning is triggered. The configuration of the resting triangle on the ground of the vehicle through the effect of the application of force M is illustrated in Figures 24 and 25. In the upper part of figure 24 a diagram is illustrated that shows the resultant R of the forces acting on the front axle 5 of the vehicle and the reactions of the ground V1 and V2 on the front wheels 4, 4'. In the lower part of Figure 24 it is illustrated how the diagram of the forces acting on the front axle 5 is modified by the effect of the application of the force M. In the diagram R1 indicates the resultant of the forces acting on the vehicle, M indicates the force applied by the actuator 7 on the front axle 5, R1+M indicates the sum of these two forces, V1' and V2' indicate the ground reactions on the front wheels 4, 4', respectively. In Figure 25 a continuous line indicates the resting triangle on the ground of the vehicle, modified after the application of the force M and, with a dotted line, the resting triangle on the ground of the vehicle, when a rear wheel is lifted and the oscillation of the front axle 5 with respect to the body 2 of the vehicle is locked, as will be explained in detail below.

The force M generates a moment with respect to the hinge connection C that contrasts the relative rotation between the front axle 5 and the body 2 of the vehicle 1, i.e. contrasts a further increase of the deviation angle β.

A second intervention threshold of the actuator 7 is defined by the exceeding of a second value β2>β1 of the size of the deviation angle β, and/or θ2>θ1 of the size of the second angle θ, which corresponds to a high overturning risk. When the size of the angle β reaches said second value β2, and/or the size of the second angle θ reaches said second value θ 2, the control device 19 locks the actuator 7 in the position in which it finds itself, preventing every further rotation of the front axle 5 with respect to the body 2 of the vehicle 1. In this condition, the front axle 5 acts as a stiff axle and the resting polygon on the ground of the vehicle is transformed into a rectangle, the vertices of which correspond to the resting points resting on the ground A, B, D, E of the rear wheels 3, 3' and of the front wheels 4, 4'. The transformation of the resting polygon into a rectangle has the effect of moving away the perimeter of the resting polygon from the action straight line of the resultant R, increasing the stability of the vehicle 1 and thus decreasing the risk of overturning.

A third intervention threshold of the actuator 7 is defined by the exceeding of a third value β3>β2 of the size of the deviation angle β, and/or θ3>θ2 of the size of the second angle θ, which corresponds to an extreme overturning risk. When the size of the angle β reaches said third value β3, and/or the size of the second angle θ reaches said third value θ3, the control device 19 commands the actuator 7 in such a manner that the stem 9 thereof exits, rotating the body 2 of the vehicle with respect to the front axle 5 in a direction opposite the overturning direction, until the angle α between the body 2 and the front axle 5 reaches the maximum value defined by the stop elements 6. When the angle α reaches maximum value, the control device locks the stem 9, to maintain said maximum value of the angle α. Consequently, the centre of gravity G of the vehicle 1 moves inside the resting polygon on the ground and the deviation angle β of the resultant R of the forces acting on the vehicle is reduced so as to increase the stability of the vehicle and contrast the overturning thereof.

The efficacy of the latter intervention mode of the system for preventing overturning according to the invention is particularly high if the vehicle has a very high centre of gravity that is moved forwards in the movement direction, as in the case in which the vehicle has a frontal device for lifting and transporting loads that transports a load in a raised position with respect to the ground. In fact, in this situation, all other conditions being equal, i.e. speed and accelerations of the vehicle 1 and tilt of the ground on which the vehicle 1 rests, the action straight line of the resultant R of the forces acting on the vehicle 1 intersects the resting triangle ABC on the ground of the vehicle in a zone that is nearer the vertex C of the triangle, with respect to the case of a vehicle devoid of said lifting and transporting device. In other words, the action straight line of the resultant R is nearer the perimeter of the triangle ABC, with respect to the case in which the vehicle 1 is devoid of the lifting and transporting device. This means that the limit of overturning stability is more easily overcome.

The second and the third intervention modes are moreover particularly effective also if one of the rear wheels lifts up from the ground.

In this condition, in the absence of the system for preventing overturning according to the invention, the resting polygon resting on the ground would degenerate into a segment having as ends the point resting on the ground of the rear wheel remaining adhering to the ground and the hinge connection C between the body 2 of the vehicle and the front axle 5. The stability of the vehicle would in this case be severely compromised.

The action performed by the system for preventing overturning according to the invention, in the second and in the third intervention mode causes the front axle 5 to be locked with respect to the body 2 of the vehicle, transforming the resting polygon resting on the ground into a triangle with the vertices consisting of the resting points resting on the ground of the front wheels and of the rear wheel remaining adhering to the ground. With this configuration of the resting polygon resting on the ground, the stability of the vehicle is increased because the perimeter of the resting polygon resting on the ground moves away from the action straight line of said resultant R, inasmuch as the resting polygon is extended from the side where the risk of overturning exists.

This condition is shown by a dotted line in Figure 25, in which lifting from the ground of the rear wheel 3 is hypothesised. In this case, the resting triangle resting on the ground is the triangle having as vertices the points B, D and E.

It should be noted that the dual-action actuator device 7 can be replaced by two single-action actuator devices, connected to the body 2 of the vehicle and to the front axle 5 on opposite sides with respect to the longitudinal centreline plane L of the vehicle 1. In this case, when the risk of overturning occurs, the system according to the invention activates the actuator located on the side where the overturning risk exists. The force applied to the front axle 5 by the single-action actuator devices is always directed towards the front axle 5.

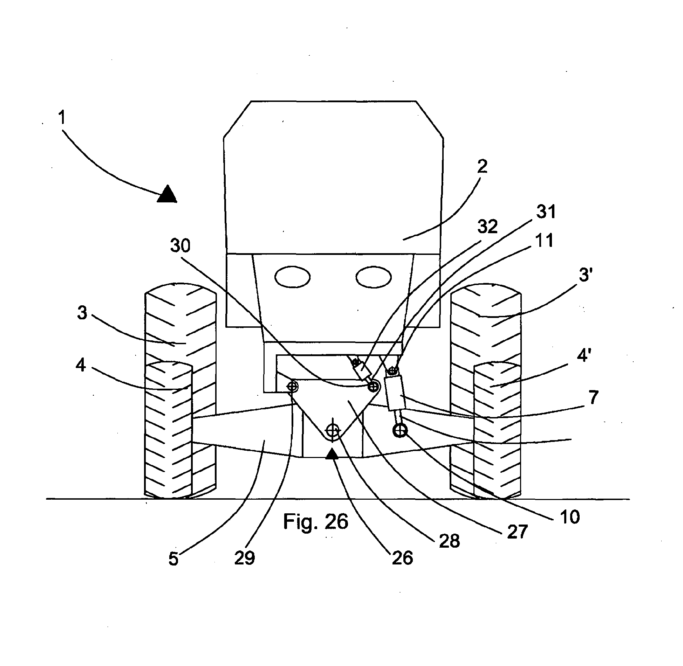

In Figure 26, there is illustrated an application of the system for preventing overturning according to the invention to a vehicle, for example a tractor, in which the front axle 5 is connected to the body 2 of the vehicle by a suspension 26.

The suspension 26 comprises a triangular plate 27 having a first vertex 28 hinged on the front axle 5 of the vehicle, a second vertex 29 hinged on the body 2 of the vehicle and a third vertex 30 hinged on the stem 31 of a further actuator 32, for example of hydraulic type, the body of which is hinged on the body 2 of the vehicle.

The dual-effect actuator 7 of the system for preventing overturning according to the invention, also in this case, is interposed between the front axle 5 and the body 2 of the vehicle 1, as already described previously, with reference to Figures 21 and 22.

When the actuator 7 is activated by the control device 19, the latter simultaneously controls locking of the second actuator 32, to make the suspension 26 stiff and thus make the connection between the front axle 5 and the body 2 of the vehicle completely similar to a hinge connection between the front axle 5 and body 2 of the vehicle, as described previously.

The intervention modes of the actuator 7 remain the same as those disclosed previously, depending on the seriousness of the overturning risk.

Also in this case it is possible to replace the dual-effect actuator device 7 with two single-action actuator devices, connected to the body 2 of the vehicle and to the front axle 5 on opposite sides with respect to the longitudinal centreline plane L of the vehicle 1.

It can be advantageously provided that the control device 19 activates an acoustic and/or luminous alarm 23 when it intervenes by activating the actuator 7 to inform the driver of the vehicle that a dangerous situation is occurring that may lead to the vehicle overturning.

The acoustic and/or luminous alarm can be advantageously set up to transmit a different signal for each intervention mode of the control device 19.

It is further possible to provide, advantageously, a displaying device 24 that is installable in the driver cab of the vehicle, which enables the driver to be supplied with information on the instantaneous state of equilibrium of the vehicle, the information that is displayable on the displaying device being supplied by the control device on the basis of the readings of the system of sensors 20. This information is used to supplement the information provided by the acoustic and/or luminous alarm.

It can be further advantageously provided that the control device 19, in the second and in the third intervention mode, can activate the release of the locking of the differential/s 21, if the vehicle is moving on a steep slope, or reduce the speed of the engine and in general of the vehicle, or lower the possible load lifting and transporting device.

The efficacy of the system for preventing overturning according to the invention is particularly high with a haulaging vehicle and with a vehicle with ballast at the front, until it becomes essential with a vehicle having a heavy tool placed at the front such as, for example, a load lifting and transporting device. In the latter case, in fact, as already said, the load lifting and transporting device moves forwards and upwards the centre of gravity of the system vehicle + tool: the combination of these two circumstances makes the overturning risk extremely high and, consequently, also the efficacy of the system that is the object of the present invention: in other words, the stabilising effect of the system for preventing overturning that is the object of the present invention is maximum for the configurations for which the intrinsic risk of overturning due to the configuration of the system vehicle + tool is maximum.

It is further advantageous to enable the system for preventing overturning according to the invention, such that it is able to be driven manually by the driver of the vehicle, who commands and adjusts manually the actuator 7 by a suitable driving device that is manually activatable and provided in the driver cab. Manual driving of the system for preventing overturning according to the invention is useful, for preventive purposes, in the case of travelling on inclined ground that is inclined transversely to the movement direction, the system in all cases activating automatically in the case of a high or extremely high overturning risk. Further, the system for preventing overturning according to the invention can be used for auxiliary services, such as lifting a wheel, for example to replace the wheel in the event of a puncture or for maintenance.

If the vehicle is provided with a load lifting and transporting device, the system for preventing overturning according to the invention can be used to lift any front wheel or rear wheel by acting on the longitudinal position or at the height of a load carried by said lifting and transporting device.

Lastly, it is advantageous that the system for preventing overturning according to the invention comprises a mobile phone device 25 that is activated by the control device 19 to call set emergency telephone numbers, in the event of overturning of the vehicle 1, to enable emergency services to intervene as rapidly as possible.

The mobile phone device can be suitably provided with a GPS localiser that is able to provide the geographical coordinates of the place to which the emergency services should be directed.

## Claims

1. A System for preventing overturning of a wheeled vehicle (1), said vehicle (1) comprising
an oscillating front axle (5) connected to a body (2) of the vehicle by a hinge connection (C), and
a rear axle connected stiffly to said body (2),
at least one actuator (7) interposed between said front axle (5) and said body (2), said actuator (7) being suitable for applying to said front axle a force (M) of controllable intensity, such as to produce controllable variations of the reactions of the ground on wheels (4, 4') connected to said front axle (5), said force (M) having an intensity depending on a deviation angle (β) and a second angle (θ),
a system (20) of sensors (S1, S2, S3, S4, S5) suitable for detecting physical quantities relating to the motion and balance conditions of said vehicle (1), said physical quantities at least comprising quantities related to the roll and pitch motion of the vehicle which are obtained from inertial type sensors S3 and S4 respectively,
a control device (19), operationally connected to said system (20) of sensors and suitable for controlling and regulating the operation of said at least one actuator (7) based on
- the deviation angle (β), which is detected by inertial sensor S3, representing a roll angle (β') corresponding to the inclination of the ground on which the vehicle (1) is travelling, and a roll angle of the vehicle (1) resulting from the centripetal acceleration of the vehicle (1) when it is moving along a curve with a curvature radius (R) at a speed (v), and
- the second angle (θ) which is detected by inertial sensor S4, representing a pitch angle (γ) corresponding to the inclination of the ground on which the vehicle (1) is travelling, and a pitch angle of the vehicle (1) resulting from the longitudinal acceleration (a) of the vehicle (1),
wherein the control device (19) is operative to maintain the actuator (7) in a floating condition when the deviation angle (β) is less than a first intervention threshold β1 and the second angle (θ) is less than a first intervention threshold θ1 and to activate the actuator (7) in such a manner that it exerts said force (M) on the front axle (5) when the deviation angle (β) is more than the first intervention threshold β1 and/or the second angle (θ) is more than the first intervention threshold θ1.

2. System for preventing overturning according to claim 1, wherein said at least one actuator (7) comprises a dual-effect hydraulic actuator, said hydraulic actuator (7) comprising a body (8), connected to said body (2) of the vehicle (1) by a first rotating connection (11), and a stem (9) connected to said front axle (5) via a second rotating connection (10).

3. System for preventing overturning according to claim 1, or 2, wherein said at least one actuator (7) comprises a first actuator and a second actuator connected to said body (2) of the vehicle (1) and to said front axle (5) on opposite sides with respect to a longitudinal centreline plane (L) of the vehicle (1).

4. System for preventing overturning according to claim 2, or 3, further comprising a supply circuit (16) suitable for supplying said at least one actuator (7) with a hydraulic fluid, said supply circuit (16) being supplied with said hydraulic fluid by a hydraulic pump (17) driven by the engine of the vehicle (1).

5. System for preventing overturning according to claim 4, further comprising a hydraulic accumulator (18) connected to said supply circuit (16).

6. System for preventing overturning according to any one of claims 1 to 4, **characterised in that** it comprises a driving device for driving said actuator (7) that is manually activatable by the driver of the vehicle (1).

7. System for preventing overturning according to claim 1, wherein said system of sensors (20) further comprises;
- a first sensor (S1) suitable for detecting the advancing speed of said vehicle (1);
- a second sensor (S2) that is suitable for detecting the steering angle of the front wheels (4, 4') of said vehicle (1);
- a fifth sensor (S5), that is suitable for detecting an angular position of said front axle (5) with respect to said body (2) of the vehicle (1).

8. System for preventing overturning according to claim 7, wherein said system of sensors (20) further comprises a sixth sensor (S6) that is suitable for detecting the driving of the command of the accelerator of said vehicle (1) and a seventh sensor (S7) that is suitable for detecting the driving of the braking device of said vehicle (1).

9. System for preventing overturning according to claim 7 or 8, comprising an eighth sensor (S8) that is suitable for detecting the weight of a load placed on a device for lifting and transporting loads connected to said vehicle (1), and a ninth sensor (S9) that is suitable for detecting the position of said load with respect to said body (2) of the vehicle (1).

10. System for preventing overturning according to claim 1, wherein said system of sensors (20) comprises a single sensor that is suitable for detecting force components, accelerations and motion states, according to three main longitudinal, transverse and vertical axes of said vehicle (1), and providing a double output signal comprising a first output signal relating to the roll and to the transverse component of inertia forces acting on the vehicle (1), and a second output signal relating to the pitch and to the longitudinal component of said inertia forces.

11. System for preventing overturning according to any one of the preceding claims, wherein said control device (19) is operationally associated with the differential/s (22) of said vehicle (1).

12. Method for contrasting overturning of a wheeled vehicle (1), said vehicle (1) comprising an oscillating front axle (5) connected to a body (2) of the vehicle by a hinge connection (C), and a rear axle connected stiffly to said body (2), said method comprising
detecting physical quantities relating to the motion and balance conditions of said vehicle (1), said physical quantities at least comprising quantities related to the roll and pitch motion of the vehicle which are obtained from inertial type sensors S3 and S4 respectively,
detecting a deviation angle (β) by inertial sensor S3, representing a roll angle (β') corresponding to the inclination of the ground on which the vehicle (1) is travelling, and a roll angle of the vehicle (1) resulting from the centripetal acceleration of the vehicle (1) when it is moving along a curve with a curvature radius (R) at a speed (v),
detecting a second angle (θ) by inertial sensor S4, representing a pitch angle (γ) corresponding to the inclination of the ground on which the vehicle (1) is travelling, and a pitch angle of the vehicle (1) resulting from the longitudinal acceleration (a) of the vehicle (1),
maintain the actuator (7) in a floating condition when the deviation angle (β) is less than a first intervention threshold β1 and the second angle (θ) is less than a first intervention threshold θ1 and to activate the actuator (7) in such a manner that it exerts said force (M) on the front axle (5),
applying to said oscillating front axle a force (M) of controllable intensity, such as to produce controllable variations of the reactions of the ground on wheels (4, 4') connected to said front axle (5), when the deviation angle (β) is more than the first intervention threshold β1 and/or the second angle (θ) is more than the first intervention threshold θ1.

13. Method according to claim 12, wherein the intensity of said force (M) is proportional to the difference β1-β.

14. Method according to claim 13, wherein said force (M) is applied at an intensity that is sufficient to prevent a relative rotation of said front axle (5) with respect to said body (2) of the vehicle (1) when the size of said deviation angle (β) exceeds a second set value β2.

15. Method according to claim 14, wherein said force (M) is applied at an intensity that is sufficient to cause a rotation of said body (2) of the vehicle (1) with respect to said front axle (5) such as to reduce the size of said deviation angle (β), when said size exceeds a third set value β3.

16. Method according to claim 15, wherein said second set value β2 is greater than said first set value β1 and said third set value β3 is greater than said second set value β2.

## Patentansprüche

1. System zum Verhindern eines Umkippens eines mit Rädern versehenen Fahrzeuges (1), wobei das Fahrzeug (1) Folgendes umfasst:
eine schwingende Vorderachse (5), die mit einem Fahrgestell (2) des Fahrzeuges über eine Gelenkverbindung (C) verbunden ist, und
eine Hinterachse, die starr mit dem Fahrgestell (2) verbunden ist,
zumindest ein Stellglied (7),das zwischen der Vorderachse (5) und dem Fahrgestell (2) eingefügt ist, wobei das Stellglied (7) zum Ausüben einer Kraft (M) mit steuerbarer Intensität auf die Vorderachse geeignet ist, derart, dass steuerbare Änderungen der Reaktionen des Bodens auf mit der Vorderachse (5) verbundene Räder (4, 4') erzeugt werden, wobei die Kraft (M) eine Intensität aufweist, die von einem Ablenkungswinkel (β) und einem zweiten Winkel (θ) abhängt,
ein System (20) von Sensoren (S1, S2, S3, S4, S5), die zum Erfassen physikalischer Größen geeignet sind, die sich auf die Bewegungs- und Gleichgewichts-Bedingungen des Fahrzeuges (1) beziehen, wobei die physikalischen Größen zumindest Größen umfassen, die auf die Querneigungs- und Längsneigungs-Bewegung des Fahrzeuges bezogen sind, die von Sensoren S3 beziehungsweise S4 vom Trägheitssensor-Typ gewonnen werden,
eine Steuereinrichtung (19), die betriebsmäßig mit dem System (20) von Sensoren verbunden und zur Steuerung und Regelung des Betriebs des zumindest einen Stellgliedes (7) auf der Grundlage von Folgendem geeignet sind:
- einem Ablenkungswinkel (β), der durch den Trägheitssensor S3 erfasst wird und einen Querneigungswinkel (β') darstellt, der der Neigung des Bodens entspricht, auf dem das Fahrzeug (1) fährt, und einen Querneigungswinkel des Fahrzeuges (1), der sich aus der Zentripetal-Beschleunigung des Fahrzeuges (1) ergibt, wenn sich das Fahrzeug entlang einer Kurve mit einem Krümmungsradius (R) mit einer Geschwindigkeit (v) bewegt, und
- dem zweiten Winkel (θ), der durch den Trägheitssensor S4 erfasst wird und einen Längsneigungswinkel (Y) darstellt, der der Neigung des Bodens entspricht, auf dem das Fahrzeug (1) fährt, und einem Längsneigungswinkel des Fahrzeuges (1), der sich aus der Längsbeschleunigung (a) des Fahrzeuges (1) ergibt,
wobei die Steuereinrichtung (19) betreibbar ist, um das Stellglied (7) in einem schwimmenden Zustand zu halten, wenn der Ablenkungswinkel (β) kleiner als ein erster Eingreif-Schwellenwert β1 ist, und um das Stellglied (7) in einer derartigen Weise zu betätigen, dass es die Kraft (M) auf die Vorderachse (5) ausübt, wenn der Ablenkungswinkel (β) größer als der erste Eingreif-Schwellenwert β1 ist und/ oder der zweite Winkel (θ) größer als der erste Eingreif-Schwellenwert θ1 ist.

2. System zum Verhindern eines Umkippens gemäß Anspruch 1, bei dem das zumindest eine Stellglied (7) ein doppelwirkendes hydraulisches Stellglied umfasst, wobei das hydraulische Stellglied (7) einen Hauptteil (8), der mit dem Fahrgestell (2) des Fahrzeuges (1) über eine erste Drehverbindung (11) verbunden ist, und einen Schaft (9) umfasst, der mit der Vorderachse (5) über eine zweite drehbare Verbindung (10) verbunden ist.

3. System zum Verhindern eines Umkippens gemäß Anspruch 1 oder 2, bei dem das zumindest eine Stellglied (7) ein erstes Stellglied und ein zweites Stellglied umfasst, die mit dem Fahrgestell des Fahrzeuges (1) und mit der Vorderachse (5) auf entgegengesetzten Seiten bezüglich einer längsverlaufenden Mittellinienebene (L) des Fahrzeuges (1) verbunden sind.

4. System zum Verhindern eines Umkippens nach Anspruch 2 oder 3, das weiterhin einen Speisekreis (16) umfasst, der zum Speisen des zumindest einen Stellgliedes (7) mit einer Hydraulikflüssigkeit geeignet ist, wobei der Speisekreis (16) mit der Hydraulikflüssigkeit von einer Hydraulikpumpe (17) gespeist wird, die von dem Motor des Fahrzeuges (1) angetrieben wird.

5. System zum Verhindern eines Umkippens nach Anspruch 4, das weiterhin einen Hydraulik-Akkumulator (18) umfasst, der mit dem Speisekreis (16) verbunden ist.

6. System zum Verhindern eines Umkippens nach einem der Ansprüche 1 bis 4, **dadurch gekennzeichnet, dass** es eine Antriebseinrichtung zum Antrieb des Stellgliedes (7) umfasst, die von dem Fahrer des Fahrzeugs (1) manuell aktivierbar ist.

7. System zum Verhindern eines Umkippens nach Anspruch 1, bei dem das System von Sensoren (20) weiterhin Folgendes umfasst:
- einen ersten Sensor (S1), der zum Erfassen der Vorwärtsbewegungsgeschwindigkeit des Fahrzeuges (1) geeignet ist;
- einen zweiten Sensor (S2), der zum Erfassen des Lenkwinkels der Vorderräder (4, 4') des Fahrzeuges (1) geeignet ist;
- einen fünften Sensor (S5), der zum Erfassen einer Winkelposition der Vorderachse (5) bezüglich des Fahrgestells (2) des Fahrzeuges (1) geeignet ist.

8. System zum Verhindern eines Umkippens gemäß Anspruch 7, bei dem das System von Sensoren (20) weiterhin einen sechsten Sensor (S6), der zum Erfassen der Ansteuerung des Befehls für das Gaspedal des Fahrzeuges (1) geeignet ist, und einen siebten Sensor (S7) umfasst, der zum Erfassen der Ansteuerung der Bremseinrichtung des Fahrzeuges (1) geeignet ist.

9. System zum Verhindern eines Umkippens nach Anspruch 7 oder 8, mit einem achten Sensor (S8), der zum Erfassen des Gewichtes einer Last geeignet ist, die auf einem Gerät zum Anheben und Transportieren von Lasten angeordnet ist, das mit dem Fahrzeug (1) verbunden ist, und einen neunten Sensor (S9), der zum Erfassen der Position der Last bezüglich des Fahrgestells (2) des Fahrzeuges geeignet ist.

10. System zum Verhindern eines Umkippens gemäß Anspruch 1, bei dem das System von Sensoren (20) einen einzelnen Sensor umfasst, der zur Erfassung von Kraftkomponenten, Beschleunigungen und Bewegungszuständen entsprechend der drei Längs-, Quer- und Vertikal-Hauptachsen des Fahrzeuges (1) geeignet ist und ein doppeltes Ausgangssignal liefert, das ein erstes Ausgangssignal, das sich auf die Querneigung und die Querkomponente von auf das Fahrzeug (1) wirkenden Trägheitskräften bezieht, und ein zweites Ausgangssignal umfasst, das sich auf die Längsneigung und die Längskomponente der Trägheitskräfte bezieht.

11. System zum Verhindern eines Umkippens nach einem der vorhergehenden Ansprüche, bei dem die Steuereinrichtung (19) betriebsmäßig dem Differenzialgetriebe oder den Differenzialgetrieben (22) des Fahrzeuges (1) zugeordnet ist.

12. Verfahren zum Entgegenwirken gegen ein Umkippen eines mit Rädern versehenen Fahrzeuges, wobei das Fahrzeug (1) eine schwingende Vorderachse (5), die mit einem Fahrgestell (2) des Fahrzeuges über eine Gelenkverbindung (C) verbunden ist, und eine Hinterachse umfasst, die starr mit dem Fahrgestell (2) verbunden ist, wobei das Verfahren Folgendes umfasst:
Erfassen physikalischer Größen, die sich auf die Bewegungs- und Gleichgewichts-Bedingungen des Fahrzeuges (1) beziehen, wobei die physikalischen Größen zumindest Größen umfassen, die auf die Querneigungs- und Längsneigungs-Bewegung des Fahrzeuges bezogen sind und die von Sensoren S3 beziehungsweise S4 vom Trägheitstyp gewonnen werden,
Erfassen eines Ablenkungswinkels (β) durch den Trägheitssensor S3, der einen Querneigungswinkel (β') darstellt, der der Neigung des Bodens, auf dem das Fahrzeug fährt, entspricht, und eines Querneigungswinkel des Fahrzeuges (1), der sich aus der Zentripetalbeschleunigung des Fahrzeuges (1) ergibt, wenn sich dieses entlang einer Kurve mit einem Krümmungsradius (R) mit einer Geschwindigkeit (v) bewegt,
Erfassen eines zweiten Winkels (θ) durch den Trägheits-Sensor S4, der einen Längsneigungswinkel (Y) darstellt, der der Neigung des Bodens, auf dem das Fahrzeug (1) fährt, und dem Neigungswinkel des Fahrzeuges (1) entspricht, der sich aus der Längsbeschleunigung (a) des Fahrzeuges (1) ergibt,
Halten des Stellgliedes (7) in einem schwimmenden Zustand, wenn der Ablenkungswinkel (β) kleiner als ein erster Eingreif-Schwellenwert β1 ist und der zweite Winkel (θ) kleiner als ein erster Eingreif-Schwellenwert θ1 ist, und Aktivieren des Stellgliedes (7) in einer derartigen Weise, dass es die Kraft (M) auf die Vorderachse (5) ausübt,
Ausüben einer Kraft (M) mit steuerbarer Intensität auf die schwingende Vorderachse, derart, dass steuerbare Änderungen der Reaktionen des Bodens auf die mit der Vorderachse (5) verbundenen Räder (4, 4') ausgeübt werden, wenn der Ablenkungswinkel (β) größer als der erste Eingreif-Schwellenwert β1 ist oder der zweite Winkel (θ) größer als der erste Eingreif-Schwellenwert θ1 ist.

13. Verfahren nach Anspruch 12, bei dem die Intensität der Kraft (M) proportional zu der Differenz β1-β ist.

14. Verfahren nach Anspruch 13, bei dem die Kraft (M) mit einer Intensität ausgeübt wird, die ausreicht, um eine Relativdrehung der Vorderachse (5) gegenüber dem Fahrgestell (2) des Fahrzeuges (1) zu verhindern, wenn die Größe des Ablenkungs-Winkels (β) einen zweiten Sollwert β2) übersteigt.

15. Verfahren nach Anspruch 14, bei dem die Kraft (M) mit einer Intensität ausgeübt wird, die ausreicht, um eine Drehung des Fahrgestells (2) des Fahrzeuges (1) gegenüber der Vorderachse (5) derart hervorzurufen, dass die Größe des Ablenkungs-Winkels (β) verringert wird, wenn diese Größe einen dritten Sollwert β3 übersteigt.

16. Verfahren nach Anspruch 15, bei dem der zweite Sollwert β2 größer als der erste Sollwert β1 ist, und der dritte Sollwert β3 größer als der zweite Sollwert β2 ist.

## Revendications

1. Système pour empêcher le basculement d'un véhicule sur roues (1), ledit véhicule (1) comprenant :
un essieu avant oscillant (5) relié à une caisse (2) du véhicule par une liaison articulée (C) ; et
un essieu arrière relié de façon rigide à ladite caisse (2) ;
au moins un actionneur (7) intercalé entre ledit essieu avant (5) et ladite caisse (2), ledit actionneur (7) étant adapté pour appliquer sur ledit essieu avant une force (M) d'intensité contrôlable, de façon à produire des variations contrôlables des réactions du sol sur les roues (4, 4') reliées au dit essieu avant (5), ladite force (M) ayant une intensité fonction d'un angle d'écart (β) et d'un second angle (θ) ;
un système (20) de capteurs (S1, S2, S3, S4, S5) aptes à détecter des quantités physiques ayant trait à des états de mouvement et d'équilibre du dit véhicule (1), lesdites quantités physiques comprenant au moins des quantités ayant trait au mouvement de roulis et de tangage du véhicule qui sont obtenues à partir de capteurs de type inertiel respectifs S3 et S4 ;
un dispositif de contrôle (19), relié fonctionnellement au dit système (20) de capteurs et approprié pour commander et réguler le fonctionnement du au moins un actionneur (7) en se basant sur :
- l'angle d'écart (β), qui est détecté par un capteur inertiel S3, représentant un angle de roulis (β') correspondant à l'inclinaison du sol sur lequel le véhicule (1) se déplace, et un angle de roulis du véhicule (1) résultant de l'accélération centripète du véhicule (1) lorsqu'il se déplace le long d'une courbe ayant un rayon de courbure (R) à une vitesse (v) ; et
- le second angle (θ) qui est détecté par un capteur inertiel S4, représentant un angle de tangage (γ) correspondant à l'inclinaison du sol sur lequel le véhicule (1) se déplace, et un angle de tangage du véhicule (1) résultant de l'accélération longitudinale (a) du véhicule (1) ;
**caractérisé en ce que** le dispositif de contrôle (19) est fonctionnel pour maintenir l'actionneur (7) dans un état flottant lorsque l'angle d'écart (β) est inférieur à un premier seuil d'intervention β1 et le second angle (θ) est inférieur à un premier seuil d'intervention θ1 et pour activer l'actionneur (7) de telle sorte qu'il exerce ladite force (M) sur l'essieu avant (5) lorsque l'angle d'écart (β) est supérieur au premier seuil d'intervention β1 et/ou le second angle (θ) est supérieur au premier seuil d'intervention θ1.

2. Système pour empêcher le basculement selon la revendication 1, **caractérisé en ce que** ledit au moins un actionneur (7) comprend un actionneur hydraulique à double effet, ledit actionneur hydraulique (7) comprenant un corps (8) relié à ladite caisse (2) du véhicule (1) par un premier raccord pivotant (11), et une tige (9) reliée au dit essieu avant (5) via un second raccord pivotant (10).

3. Système pour empêcher le basculement selon la revendication 1 ou 2, **caractérisé en ce que** ledit au moins un actionneur (7) comprend un premier actionneur et un second actionneur reliés à ladite caisse (2) du véhicule (1) et au dit essieu avant (5) à des côtés opposés par rapport à un plan d'axe central longitudinal (L) du véhicule (1).

4. Système pour empêcher le basculement selon la revendication 2 ou 3, comprenant en plus un circuit d'alimentation (16) approprié pour alimenter ledit au moins un actionneur (7) avec un fluide hydraulique, ledit circuit d'alimentation (16) étant alimenté avec ledit fluide hydraulique par une pompe hydraulique (17) actionnée par le moteur du véhicule (1).

5. Système pour empêcher le basculement selon la revendication 4, comprenant en plus un accumulateur hydraulique (18) relié au dit circuit d'alimentation (16).

6. Système pour empêcher le basculement selon l'une quelconque des revendications 1 à 4, **caractérisé en ce qu'**il comprend un dispositif de commande pour commander ledit actionneur (7) qui est actionnable manuellement par le conducteur du véhicule (1).

7. Système pour empêcher le basculement selon la revendication 1, **caractérisé en ce que** ledit système de capteurs (20) comprend en plus :
- un premier capteur (S1) approprié pour détecter la vitesse de déplacement du dit véhicule (1),
- un second capteur (S2) approprié pour détecter l'angle de braquage des roues avant (4, 4') du dit véhicule (1),
- un cinquème capteur (S5) approprié pour détecter position angulaire du dit essieu avant (5) par rapport à ladite caisse (2) du véhicule (1).

8. Système pour empêcher le basculement selon la revendication 7, **caractérisé en ce que** ledit système de capteurs (20) comprend en plus un sixième capteur (S6) qui est approprié pour détecter l'actionnement de la commande d'accélérateur du dit véhicule (1) et un septième capteur (S7) qui est apte à détecter l'actionnement du système de freinage du dit véhicule (1).

9. Système pour empêcher le basculement selon la revendication 7 ou 8, comprenant un huitième capteur (S8) qui est approprié pour détecter le poids d'une charge placée sur un appareil de levage et de transport de charges relié au dit véhicule (1), et un neuvième capteur (S9) qui est approprié pour détecter la position de ladite charge par rapport à ladite caisse (2) du véhicule (1).

10. Système pour empêcher le basculement selon la revendication 1, **caractérisé en ce que** ledit système de capteurs (20) comprend un capteur unique qui est adapté pour détecter des composantes de force, des accélérations et des états de mouvement, selon trois axes principaux longitudinal, transversal et vertical du dit véhicule (1), et délivrant un double signal de sortie comprenant un premier signal de sortie ayant trait à la composante de roulis et la composante transversale des forces d'inertie agissant sur le véhicule (1), et un second signal de sortie ayant trait à la composante de tangage et la composante longitudinale des dites forces d'inertie.

11. Système pour empêcher le basculement selon l'une quelconque des revendications précédentes, **caractérisé en ce que** ledit dispositif de contrôle (19) est associé fonctionnellement au(x) différentiel(s) (22) du dit véhicule (1).

12. Procédé pour empêcher le basculement d'un véhicule sur roues (1), ledit véhicule (1) comprenant un essieu avant oscillant (5) relié à une caisse (2) du véhicule par une liaison articulée (C), et un essieu arrière relié de façon rigide à ladite caisse (2), ledit procédé comprenant les étapes consistant à :
détecter des quantités physiques ayant trait à des états de mouvement et d'équilibre du dit véhicule (1), lesdites quantités physiques comprenant au moins des quantités ayant trait au mouvement de roulis et de tangage du véhicule qui sont obtenues à partir de capteurs de type inertiel respectifs S3 et S4 ;
détectant l'angle d'écart (β) par un capteur inertiel S3, représentant un angle de roulis (β') correspondant à l'inclinaison du sol sur lequel le véhicule (1) se déplace, et un angle de roulis du véhicule (1) résultant de l'accélération centripète du véhicule (1) lorsqu'il se déplace le long d'une courbe ayant un rayon de courbure (R) à une vitesse (v), et
détectant un second angle (θ) par un capteur inertiel S4, représentant un angle de tangage (γ) correspondant à l'inclinaison du sol sur lequel le véhicule (1) se déplace, et un angle de tangage du véhicule (1) résultant de l'accélération longitudinale (a) du véhicule (1 ),
maintenir l'actionneur (7) dans un état flottant lorsque l'angle d'écart (β) est inférieur à un premier seuil d'intervention β1 et le second angle (θ) est inférieur à un premier seuil d'intervention θ1 et pour activer l'actionneur (7) de telle sorte qu'il exerce ladite force (M) sur l'essieu avant (5)
appliquer sur ledit essieu avant oscillant une force (M) d'intensité contrôlable, de manière à produire des variations contrôlables des réactions du sol sur les roues (4, 4') reliées au dit essieu avant (5), lorsque l'angle d'écart (β) est supérieur au premier seuil d'intervention β1 et/ou le second angle (θ) est supérieur au premier seuil d'intervention θ1.

13. Procédé selon la revendication 12, **caractérisé en ce que** l'intensité de ladite force (M) (M) est proportionnel à la différence ∃1 - ∃.

14. Procédé selon la revendication 13, **caractérisé en ce que** ledit force (M) est appliquée à une intensité qui est suffisante pour empêcher une rotation relative du dit essieu avant (5) par rapport à ladite caisse (2) du véhicule (1) lorsque la valeur du dit angle d'écart (β) est supérieure à une seconde valeur de consigne β2.

15. Procédé selon la revendication 14, **caractérisé en ce que** ledit force (M) est appliquée à une intensité qui est suffisante pour engendrer une rotation de ladite caisse (2) du véhicule (1) par rapport au dit essieu avant (5) de sorte à réduire la valeur du dit angle d'écart (β), lorsque ladite valeur est supérieure à une troisième valeur de consigne β3.

16. Procédé selon la revendication 15, **caractérisé en ce que** ledit seconde valeur de consigne β2 est supérieure à ladite première valeur de consigne β1 et ladite troisième valeur de consigne β3 est supérieure à ladite seconde valeur de consigne β2.
